# EUROPÄISCHE PATENTANMELDUNG

(11) **EP 2 239 490 A1**
(43) Veröffentlichungstag der Anmeldung: **13.10.2010**
(21) Anmeldenummer: 10001357.2
(22) Anmeldetag: 10.02.2010
(51) Int. Cl.: F16L 55/105, F16L 55/124

(54) **Vorrichtung zum Absperren von Rohren für strömende Medien**

(30) Priorität: 08.04.2009 DE 102009016615
(71) Anmelder: Manibs Spezialarmaturen GmbH, 66386 St. Ingbert (DE)
(72) Erfinder: Hintzen, Werner, 50765 Köln (DE)
(74) Vertreter: Patentanwälte Buse, Mentzel, Ludewig

(57) **Zusammenfassung**

Die Erfindung betrifft eine Vorrichtung zum Absperren von Rohren (10) für strömende Medien. Es ist ein Durchströmungsbereich (12) vorgesehen, durch welchen das Medium das Rohr (10) durchströmen kann. Außerdem weist die Vorrichtung ein Absperrorgan (20) auf, welches zumindest zeit- und/oder bereichsweise in einem Stutzen (14) angeordnet ist und zumindest ein Sperrglied (21) umfasst. Weiterhin weist das Absperrorgan (20) einen Ruhezustand (20.1) auf, in welchem der Durchströmungsbereich (12) für das Medium durchgängig ist und einen Sperrzustand (20.2), in welchem der Durchströmungsbereich (12) für das Medium durch das Sperrglied (21) gesperrt ist. Die Erfindung schlägt vor, das Sperrglied (21) als einen im Wesentlichen scheibenförmigen Sperrkörper (24) auszubilden, dessen Außenumfang (25) dem Innenumfang (13) des Durchströmungsbereiches (12) angepasst ist. Weiterhin verfügt das Sperrglied (21) über einen Sperrvorsprung (26), welcher in den Stutzen (14) hineinragt und mit einem am bzw. im Stutzen (14) befindlichen Gegenvorsprung (15) in Wirkverbindung bringbar ist. Der Sperrkörper (24) und/oder das Sperrglied (21) ist mit einer an der Außenkontur (23) bzw. dem Außenumfang (25) angeordneten, umlaufenden Dichtlippe (30) versehen (Fig. 7).

## Beschreibung

Die Erfindung betrifft eine Vorrichtung zum Absperren von Rohren für strömende Medien der im Oberbegriff von Anspruch 1 genannten Art. Solche Vorrichtungen finden vielfach Verwendung, so beispielsweise auch im Bereich von Gas- und Wasserleitungen. Solche medienführende Rohre müssen ggf. abgesperrt werden können, beispielsweise um einen Teil der Rohrleitung dauerhaft stillzulegen oder auch um Reparatur-, Wartungs- und/oder Anschlussarbeiten vornehmen zu können. Hierbei ist es oft wünschenswert, das Medium in der restlichen Rohrleitung zu belassen, und nicht das ganze Rohrleitungssystem medienfrei stellen zu müssen.

Es ist daher bekannt Absperrschieber vorzusehen, welche ein Sperrglied aufweisen, das den Durchströmungsbereich des Rohres abdichtet. Diese Sperrglieder sind häufig als feste Keile ausgebildet. Solche Absperrschieber können nicht einfach in einem bestehenden Rohr nachgerüstet werden. Darüber hinaus ergibt sich, insbesondere bei Kunststoffrohren, der Nachteil, dass im Bereich des Sperrgliedes das Rohr mechanisch beansprucht wird. Selbst bei hochwertigen Kunststoffrohren kann es dann geschehen, dass das Kunststoffmaterial im Bereich des Sperrgliedes zu fließen anfängt, was Undichtigkeiten und Leckagen zur Folge hat. Gerade bei Gasleitungen ist dies jedoch nicht nur unerwünscht, sondern auch gefährlich.

Um kurzfristig, beispielsweise für Reparatur- oder Wartungsarbeiten, ein Rohr abzusperren, werden in den Durchströmungsbereich ein oder mehrere Ballons aus elastischem Material eingebracht. Diese werden dann von außen mit einem Gas, beispielsweise mit Luft, gefüllt und dichten so das Rohr gegenüber dem Medium ab. Solche Ballons können auch in eine bestehende medienbeaufschlagte Rohrleitung eingebracht werden. Diese Art Vorrichtungen sind jedoch nicht zum dauerhaften Absperren eines Rohrstückes geeignet. Darüber hinaus können keine Rohre, deren Mediendruck im Hochdruckbereich liegt, abgesperrt werden. Üblicherweise finden die Ballons nur Anwendung bei Mediendrücken bis 1 bar.

Aufgabe der Erfindung ist es daher, eine Vorrichtung zu schaffen, mittels derer sich mit Mediendruck beaufschlagte Rohre sicher absperren lassen, selbst wenn sich der Mediendruck im Hochdruckbereich befindet, und die sich auch nachträglich in eine bestehende Rohrleitung einbringen lassen. Weiterhin ist es Aufgabe der Erfindung eine Möglichkeit zum mediendichten Absperren des Rohres zu bieten, bei welcher das Rohr keinen mechanischen Belastungen durch das Sperrglied ausgesetzt wird. Diese Aufgabe wird erfindungsgemäß durch die kennzeichnenden Merkmale von Anspruch 1 gelöst, denen folgende besondere Bedeutung zukommt.

Das Sperrglied ist als ein im Wesentlichen scheibenförmiger Sperrkörper ausgebildet. Der Außenumfang des Sperrgliedes ist dabei dem Innenumfang des Durchströmungsbereiches angepasst. Weiterhin verfügt das Sperrglied über einen Sperrvorsprung, welcher in den Stutzen hineinragt, der mit einem zum Stutzen gehörigen Gegenvorsprung im Sperrzustand des Absperrorgans in Wirkverbindung bringbar ist. Der Sperrkörper bzw. das Sperrglied ist dabei mit einer an der Außenkontur bzw. an dem Außenumfang angeordneten umlaufenden Dichtlippe versehen. Diese Dichtlippe dient der Abdichtung zwischen dem Sperrglied und Durchströmungsbereich des Rohres bzw. dem Stutzen. Die Abdichtung erfolgt dabei über sämtliche Kontaktflächen des Sperrgliedes zum Rohr bzw. zum Stutzen.

Besonders vorteilhaft ist es, wenn die Dichtlippe so ausgebildet ist, dass sie von dem im Rohr anliegenden Mediendruck an die Innenwand des Rohres gedrückt wird. Dies erhöht die Abdichtung bei ansteigendem Mediendruck. Eine derart ausgebildete Vorrichtung ist selbst für den Hochdruckbereich bei flüssigen und gasförmigen Medien geeignet.

Um den Mediendruck besonders gut aufnehmen zu können, kann der Sperrkörper vorteilhafterweise in Form eines Klöpperbodens oder Korbbogenbodens ausgebildet sein. Diese Formen haben sich im Bereich der Druck- und Apparatetechnik bewährt, da sie dazu geeignet sind höhere Drücke aufzunehmen ohne eine raumaufwendige Halbkugelform einzunehmen.

In einer weiteren bevorzugten Ausführungsform sind zwei Sperrglieder vorgesehen, welche beide in den Durchströmungsbereich einführbar sind und sich relativ zueinander bewegen können. Dies hat den Vorteil, dass der Durchströmungsbereich an zwei Stellen für das Medium gesperrt werden kann. Dies ist insbesondere im Bereich der Gasleitungen wichtig, wo entsprechende Sicherheitsvorschriften häufig eine doppelte Absperrung des Durchströmungsbereiches vorschreiben.

Vorteilhafterweise kann dann zwischen den beiden Sperrgliedern eine Entlüftungseinrichtung für das Rohr vorgesehen sein. Dies ist insbesondere bei gasführenden Rohren vorteilhaft, um eventuelles, das Sperrglied umgehendes Schleichgas aus dem abgesperrten Bereich zu entfernen. Somit kann sichergestellt werden, dass das Rohr hinter dem zweiten Sperrglied gasfrei bleibt.

Weitere Ausführungsformen und Vorteile der Erfindung ergeben sich aus der nachfolgenden Beschreibung, den Unteransprüchen und den Zeichnungen. In den Zeichnungen ist die Erfindung in einem Ausführungsbeispiel dargestellt. Es zeigen:
- Fig. 1: eine erfindungsgemäße Vorrichtung in Ruhelage im Schnitt;
- Fig. 2: die Vorrichtung aus Fig. 1 in perspektivischer Darstellung;
- Fig. 3: die Vorrichtung analog zu Fig. 1 beim Überführen von Ruhelage in Sperrlage;
- Fig. 4: ein vergrößerter Detailausschnitt aus Fig. 3;
- Fig. 5a: die Sperrglieder in Ruhelage in Seitenansicht;
- Fig. 5b: die Elemente aus Fig. 5a in Draufsicht;
- Fig. 6: eine Vorrichtung analog Fig. 3 in Sperrlage;
- Fig. 7: ein vergrößerter Ausschnitt aus Fig. 6 analog Fig. 4;
- Fig. 8a: die Sperrglieder in Sperrlage in Seitenansicht;
- Fig. 8b: die Elemente aus Fig. 8a in Draufsicht.

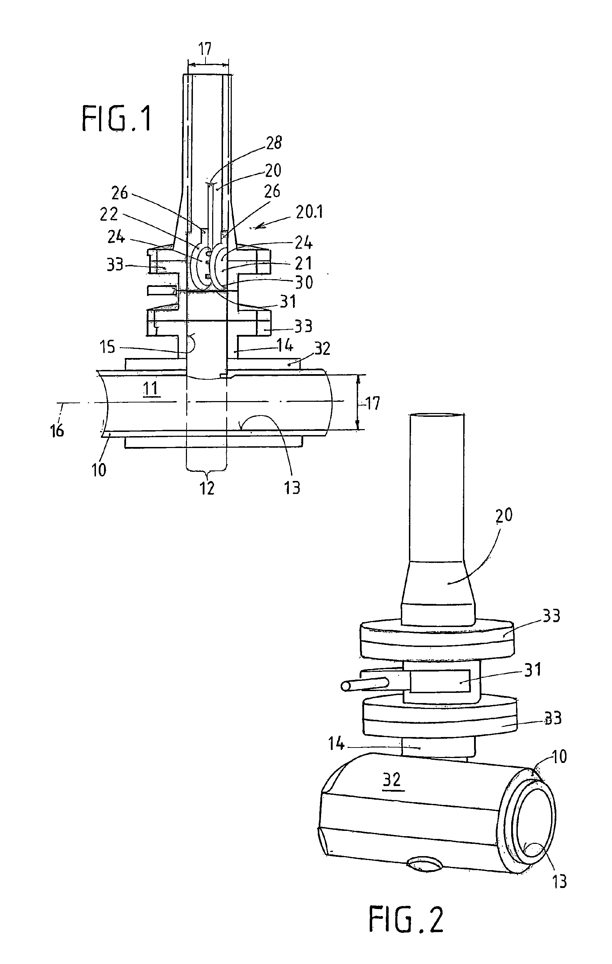

Fig. 1 zeigt die erfindungsgemäße Vorrichtung, welche am Durchströmungsbereich 12 des Rohres 10 angeordnet ist. Das Absperrorgan 20 ist im Stutzen 14 angeordnet und umfasst hier zwei Sperrglieder 21, 22. Der Stutzen 14 weist die gleiche Nennweite 17 auf, wie das Rohr 10 und dessen Durchströmungsbereich 12. Diese Nennweitengleichheit ermöglicht es erst die Sperrglieder 21, 22, bei welchen die Sperrkörper 24 in ihrem Außenumfang 25 in etwa dem Innenumfang 13 des Rohres 10 entsprechen, in das Rohr 10 einzubringen. So ist es möglich, dass die Sperrkörper 24 starr ausgebildet sein können, was die Dichtigkeit der Absperrung erhöht und den Einsatz im Hochdruckbereich erst ermöglicht.

Des Weiteren erkennt man in Fig. 1 die Schleuse 31, die den Stutzen 14 verschließt. Das Absperrorgan 20 ist dabei im Ruhezustand 20.1. Die Sperrglieder 21, 22 befinden sich im Stutzen 14 und ragen nicht in das Rohr 10 oder dessen Durchströmungsbereich 12 hinein. In diesem Zustand ist die Vorrichtung dauerhaft einsetzbar, beispielsweise wenn eine Absperrung des Rohres 10 nur gelegentlich erfolgen soll. Wenn eine Absperrung des Rohres 10 zukünftig gar nicht mehr erfolgen soll, ist es auch möglich, das Absperrorgan 20 vollständig zu entfernen. Es kann dann auch ein Stopfen in den Stutzen 14 eingebracht werden, um eine dauerhafte Absperrung des Stutzens 14 zu erreichen. In diesem Fall dient die Vorrichtung als Stoppelgerät.

Fig. 2 zeigt die erfindungsgemäße Vorrichtung in perspektivischer Außenansicht. Man erkennt das Rohr 10 sowie den Stutzen 14. Im vorliegenden Beispiel wurde der Stutzen 14 nachträglich am Rohr 10 angebracht. Hierzu dient die Rohschelle 32, welche von außen um das Rohr 10 herumgelegt und dort befestigt wird. Da es sich bei dem hier dargestellten Rohr 10 um ein Kunststoffrohr handelt, verfügt die Rohrschelle 32 an ihrer Innenseite über Heizwendeln. Durch Anlegen einer elektrischen Spannung erfolgt dann die Verschweißung der Rohrschelle 32 am Rohr 10, sodass eine unlösbare Verbindung entsteht. Der Stutzen 14 ist direkt einstückig an der Rohrschelle 32 angeordnet. Des Weiteren ist noch ein Bauteil am Stutzen 14 angeflanscht 33, welcher die Schleuse 31 enthält. Es ist nun möglich, zunächst eine Vorrichtung anzuflanschen 33, welche die Wand des Rohres 10 im Bereich des Stutzens 14 anbohrt. Nach dem Anbohrvorgang kann man dann die Schleuse 31 schließen und die Bohrvorrichtung entfernen; sodann wird das erfindungsgemäße Absperrorgan 20 montiert und die Schleuse 31 wieder geöffnet, um das bzw. die Sperrglieder 21, 22 in den Durchströmungsbereich 12 des Rohres 10 einführen zu können. Dann ist es möglich, auf der dem Medium abgewandten Seite der Sperrglieder 21, 22 Wartungs-, Reparatur- oder Montagearbeiten durchzuführen. Das Absperrorgan 20 kann auch dauerhaft in seinem Sperrzustand 20.2 verbleiben. Es kann jedoch auch wieder in seinen Ruhezustand 20.1 überführt werden. Möchte man das Absperrorgan 20 vollständig entfernen, so wird wieder die Schleuse 31 geschlossen, um einen Austritt des Mediums durch den Stutzen 14 zu vermeiden.

Falls es sich bei dem Rohr 10 um ein Metallrohr handelt, kann die Rohrschelle 32 selbstverständlich auch auf andere Art und Weise lösbar oder unlösbar mit dem Rohr 10 verbunden werden. Der Stutzen 14 kann, insbesondere bei einem Kunststoffrohr, auch aus Kunststoff bestehen.

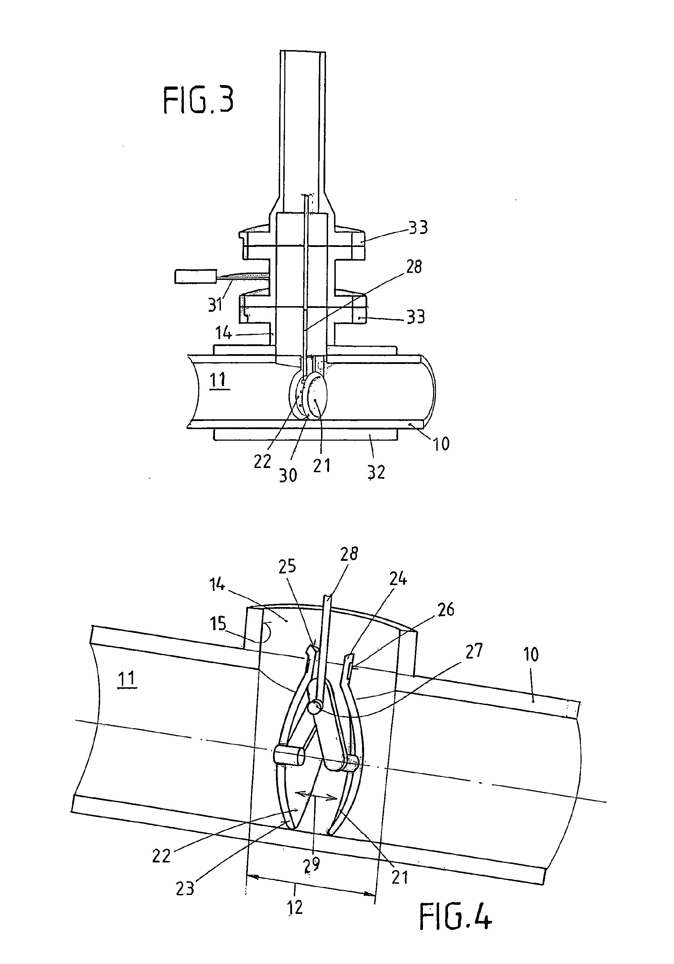

Fig. 3 zeigt nunmehr die erfindungsgemäße Vorrichtung mit Absperrorgan 20 und Rohr 10. Die Sperrglieder 21, 22 sind bereits in den Durchströmungsbereich 12 des Rohres 10 eingebracht. Das Absperrorgan 20 befindet sich jedoch noch nicht im Sperrzustand 20.2. Detaillierter wird die Anordnung der Sperrglieder 21, 22 aus Fig. 4 ersichtlich. Die an den Sperrgliedern 21, 22 befindlichen Dichtlippen 30 liegen noch nicht vollständig an der Innenwand 11 des Rohres 10 an und die Sperrvorsprünge 26 sind noch nicht mit den Gegenvorsprüngen 15 am Stutzen 15 in Wirkverbindung gebracht. In diesem Zustand sind die Sperrglieder 21, 22 im Stutzen 14 axial verschieblich. Eine Relativbewegung 29 der beiden Sperrglieder 21, 22 zueinander hat jedoch noch nicht stattgefunden.

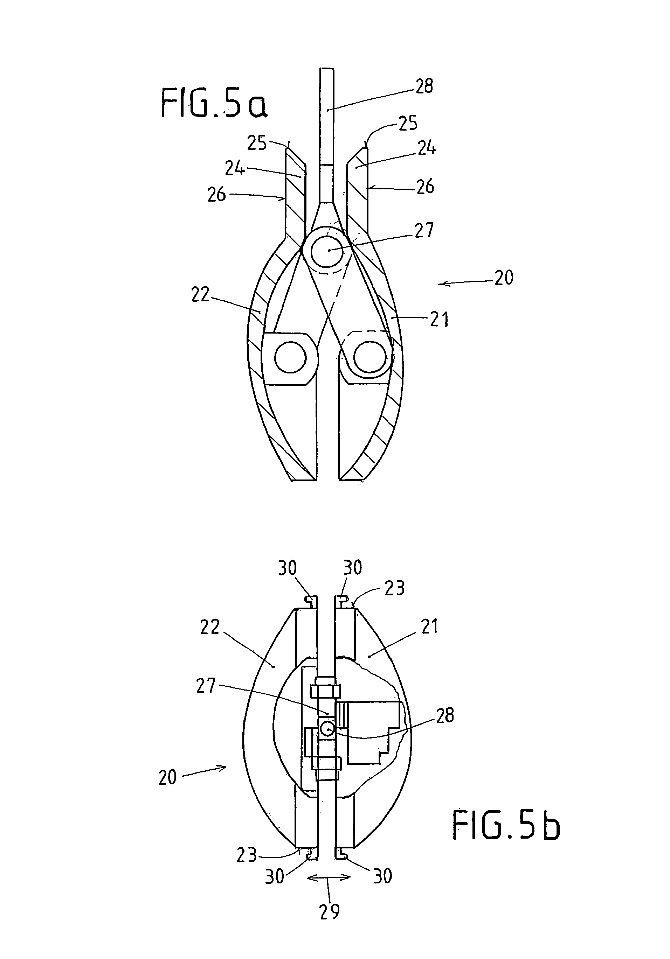

Diese Bewegung 29 der Sperrglieder 21, 22 zueinander wird im vorliegenden Fall mittels eines Gelenkes 27, welches hier als Kniegelenk ausgebildet ist, realisiert. Dies wird auch aus den Fig. 5a und 5b näher ersichtlich. Das Kniegelenk 27 ist in diesen Figuren gebeugt. Die beiden Sperrglieder 21, 22 sind daher dicht zusammen. Selbstverständlich ist es auch möglich, mehrere Gelenke vorzusehen, welche eine Bewegung 29 der Sperrglieder 21, 22 zueinander ermöglichen. Am Gelenk 27 ist die Gewindespindel 28 angelenkt. Durch eine Bewegung der Gewindespindel 28 senkrecht zur Axialrichtung 16 des Durchströmungsbereiches 12 wird über das Gelenk 27 eine Bewegung 29 auf die Sperrglieder 21, 22 zueinander übertragen. Selbstverständlich kann das Gelenk 27 auch hydraulisch bewegt werden. Auch ist es möglich, anstelle des Gelenkes 27 konzentrische Zylinder vorzusehen, welche ineinander verschieblich sind, und so die Bewegung 29 der Sperrglieder 21, 22 zueinander ermöglichen. Auch hier kann die Bewegung 29 der Sperrglieder 21, 22 zueinander hydraulisch erfolgen.

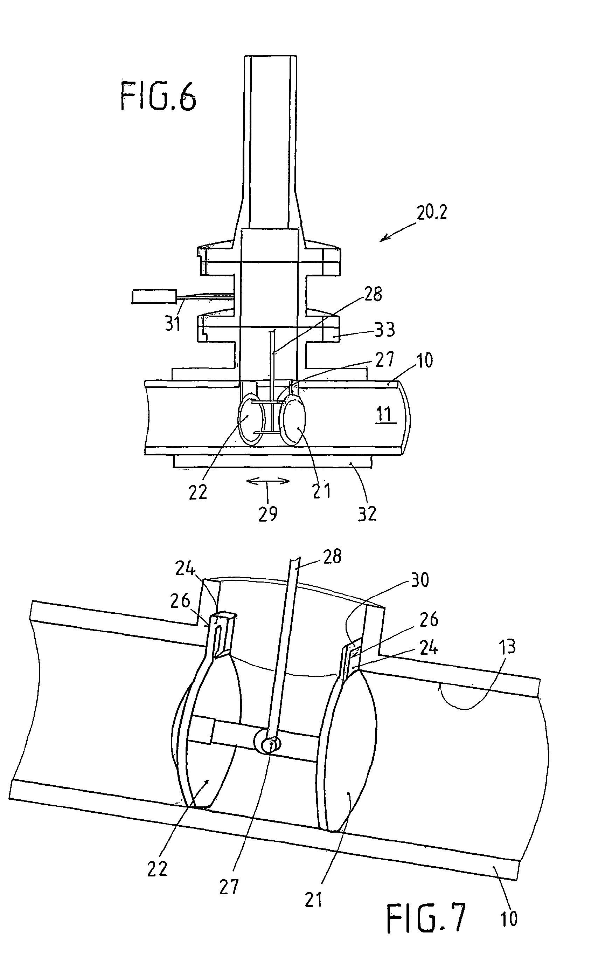

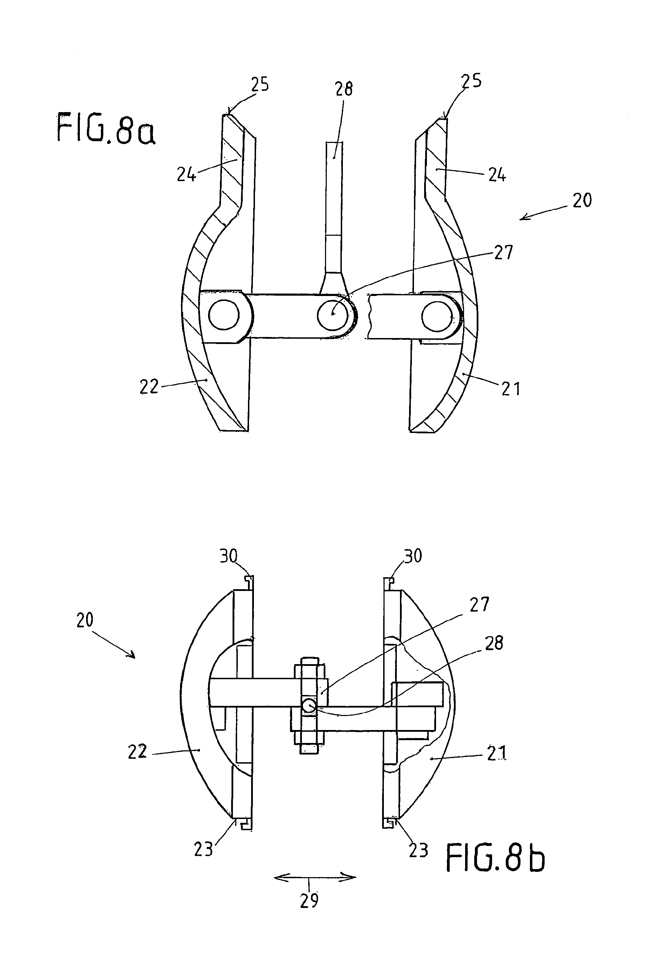

Das Absperrorgan 20 in seinem Sperrzustand 20.2 zeigen die Figuren 7, 8a und 8b. Jedes der Sperrglieder 21, 22 sperrt hierbei den Durchströmungsbereich 12 ab und zwar vorwiegend im Einmündungsbereich des Stutzens 14. Die beiden Sperrkörper 24, die die Sperrvorsprünge 20 aufweisen, liegen dabei am Stutzen 14 an, wobei die Sperrvorsprünge 26 mit den Gegenvorsprüngen 15 in Wirkverbindung stehen. Die Dichtlippe 30, welche sowohl die Außenkonturen 23 der Sperrglieder 21, 22 als auch den Außenumfängen 25 der Sperrkörper 24 umfasst, liegt an der Innenwand 11 des Rohres 10 sowie am Inneren des Stutzens 14 an. Es ist besonders vorteilhaft, die Sperrkörper 24 bzw. die Sperrvorsprünge 26 aus Metall vorzusehen. Hierbei bietet sich insbesondere Edelstahl oder Guss an. Alternativ kann als Material auch verstärkter Kunststoff gewählt werden. Bei diesen vorerwähnten Materialien und einer gut gewählten Geometrie des Sperrkörpers 24, wie beispielsweise in Form eines Klöpperbodens bzw. Korbbogenbodens, ist dann das Absperrorgan 20 auch für den Hochdruckbereich einsetzbar. Die Dichtlippe 30 kann dann an den Sperrkörper 24 bzw. den Sperrvorsprung 26 vulkanisiert sein. So wird eine sichere und dichte Verbindung zwischen Sperrkörper 24 bzw. Sperrvorsprung 26 und Dichtlippe 30 geschaffen.

Zum Überführen des Absperrorganes 20 in den gezeigten Sperrzustand 20.2 wurde die bereits beschriebene Gewindespindel 28 senkrecht zur Axialrichtung 16 des Durchströmungsbereiches 12 auf das Rohr 10 zubewegt. Dadurch wird das Gelenk 27 gestreckt, wodurch die beiden Sperrglieder 21, 22 sich relativ zueinander in Axialrichtung 16 des Durchströmungsbereiches 12 bewegen. In dem gezeigten Sperrzustand 20.2 ist das Rohr 10 jetzt sicher abgesperrt und an der dem Medienstrom abgewandten Seite können beispielsweise Wartungs-, Montage- und/oder Reparaturarbeiten erfolgen.

Abschließend sei festzustellen, dass die hier dargestellten Ausführungsformen lediglich beispielhafte Verwirklichungen der Erfindung sind. Diese ist nicht darauf beschränkt. Es sind vielmehr noch Abänderungen und Abwandlungen möglich.

### Bezugszeichenliste:

- 10: Rohr
- 11: Innenwand von 10
- 12: Durchströmungsbereich
- 13: Innenumfang von 12
- 14: Stutzen
- 15: Gegenvorsprung an 14
- 16: Axialrichtung von 12
- 17: Nennweite von 10, 12, 14
- 20: Absperrorgan
- 20.1: Ruhezustand von 20
- 20.2: Sperrzustand von 20
- 21: Sperrglied
- 22: Zweites Sperrglied
- 23: Außenkontur von 21, 22
- 24: Sperrkörper
- 25: Außenumfang von 24
- 26: Sperrvorsprung
- 27: Gelenk
- 28: Gewindespindel
- 29: Bewegungsrichtung zwischen 21 und 22
- 30: Dichtlippe
- 31: Schleuse
- 32: Rohrschelle
- 33: Flansch

## Patentansprüche

1. Vorrichtung zum Absperren von Rohren (10) für strömende Medien,
mit einem Durchströmungsbereich (12), durch welchen das Medium das Rohr (10) durchströmen kann
mit einem Absperrorgan (20), welches zumindest zeit- und/oder bereichsweise in einem Stutzen (14) angeordnet ist und zumindest ein Sperrglied (21) umfasst und welches in einen Ruhezustand (20.1), in welchem der Durchströmungsbereich (12) für das Medium durchgängig ist, und in einen Sperrzustand (20.2), in welchem der Durchströmungsbereich (12) für das Medium durch das Sperrglied (21) verschlossen ist, überführbar ist,
**dadurch gekennzeichnet,**
**dass** das Sperrglied (21) als im Wesentlichen scheibenförmiger Sperrkörper (24) ausgebildet ist, dessen Außenumfang (25) dem Innenumfang (13) des Durchströmungsbereichs (12) angepasst ist,
**dass** das Sperrglied (21) weiterhin über einen Sperrvorsprung (26) verfügt, welcher in den Stutzen (14) hereinragt und mit einem am bzw. im Stutzen (14) befindlichen Gegenvorsprung (15) im Sperrzustand (20.2) des Absperrorgans (20) in Wirkverbindung bringbar ist
und wobei der Sperrkörper (24) und/oder das Sperrglied (21) mit einer an seiner Außenkontur (23) bzw. seinem Außenumfang (25) angeordneten umlaufenden Dichtlippe (30) versehen sind.

2. Vorrichtung nach Anspruch 1, **dadurch gekennzeichnet, dass** der Sperrkörper (24) in Form eines Klöpperbodens oder Korbbogenbodens ausgebildet ist.

3. Vorrichtung nach einem der Ansprüche 1 oder 2, **dadurch gekennzeichnet, dass** die Dichtlippe (30) so ausgebildet ist, dass sie von einem in dem Rohr (10) anliegenden Mediendruck an die Innenwand (11) des Rohres (10) gedrückt wird.

4. Vorrichtung nach einem der Ansprüche 1 bis 3, **dadurch gekennzeichnet, dass** die Dichtlippe (30) an den Sperrkörper (24) und/oder den Sperrvorsprung (26) vulkanisiert ist.

5. Vorrichtung nach einem der Ansprüche 1 bis 4, **dadurch gekennzeichnet, dass** zwei Sperrglieder (21, 22) vorgesehen sind, welche in den Durchströmungsbereich (12) einführbar und zueinander beweglich (29) angeordnet sind.

6. Vorrichtung nach Anspruch 5, **dadurch gekennzeichnet, dass** die Sperrglieder (21, 22) zueinander in Axialrichtung (16) des Durchströmungsbereiches (12) verschieblich sind, wobei im Sperrzustand (20.2) des Absperrorgans (20) jedes der Sperrglieder (21, 22) den Durchströmungsbereich (12) absperrt.

7. Vorrichtung nach einem der Ansprüche 5 oder 6, **dadurch gekennzeichnet, dass** im Sperrzustand (20.2) zwischen den beiden Sperrgliedern (21, 22) eine Entlüftung des Rohres (10) vorgesehen ist.

8. Vorrichtung nach einem der Ansprüche 5 bis 7, **dadurch gekennzeichnet, dass** die Bewegung (29) der Sperrglieder (21, 22) zueinander mittels eines oder mehrerer Gelenke (27), insbesondere mittels Kniegelenken erfolgt.

9. Vorrichtung nach einem der Ansprüche 5 bis 8, **dadurch gekennzeichnet, dass** die Bewegung (29) der Sperrglieder (21, 22) zueinander mittels einer Gewindespindel (28) durchführbar ist.

10. Vorrichtung nach einem der Ansprüche 5 bis 8, **dadurch gekennzeichnet, dass** die Bewegung (29) der Sperrglieder (21, 22) zueinander hydraulisch erfolgt.

11. Vorrichtung nach Anspruch 10, **dadurch gekennzeichnet, dass** zwischen den beiden Sperrgliedern (21, 22) konzentrische Zylinder vorgesehen sind, welche ineinander verschieblich sind und so die Bewegung (29) der Sperrglieder (21, 22) zueinander bestimmen.

12. Vorrichtung nach einem der Ansprüche 1 bis 11, **dadurch gekennzeichnet, dass** im Ruhezustand (20.1) des Absperrorgans (20) der Stutzen (14) durch eine Schleuse (31) und/oder eine Sperrscheibe verschließbar ist.

13. Vorrichtung nach einem der Ansprüche 1 bis 12, **dadurch gekennzeichnet, dass** der Stutzen (14) nachträglich an ein bestehendes und/oder montiertes Rohr (10) anbringbar, insbesondere anschweißbar ist, vorzugsweise unter Zwischenschaltung einer Rohrschelle (32), die unlösbar mit dem Rohr (10) verbindbar ist, wobei der Stutzen (14) mit einem oder mehreren Flanschen (33) versehen sein kann, um weitere Elemente, wie beispielsweise das Absperrorgan (20) und/oder einen die Schleuse (31) enthaltenden Bauteil anzuflanschen.

14. Vorrichtung nach einem der Ansprüche 1 bis 13, **dadurch gekennzeichnet, dass** der Durchströmungsbereich (12) und/oder das Rohr (10) und/oder der Stutzen (14) nennweitengleich (17) sind.

15. Vorrichtung nach einem der Ansprüche 1 bis 14, **dadurch gekennzeichnet, dass** das Rohr (10) und/oder der Stutzen (14) und/oder der Durchströmungsbereich (12) aus Kunststoff bestehen.

16. Vorrichtung nach einem der Ansprüche 1 bis 15, **dadurch gekennzeichnet, dass** der Sperrkörper (24) und/oder der Sperrvorsprung (26) aus Metall, insbesondere aus Edelstahl oder Guss, oder aus verstärktem Kunststoff bestehen.

## Geänderte Patentansprüche

### Geänderte Patentansprüche gemäss Regel 137(2) EPÜ.

1. Vorrichtung zum Absperren von Rohren (10) für strömende Medien,
mit einem Durchströmungsbereich (12) an der Vorrichtung, durch welchen das Medium die Vorrichtung durchströmen kann
mit einem Absperrorgan (20), welches zumindest zeit- und/oder bereichsweise in einem an der Vorrichtung befindlichen Stutzen (14) angeordnet ist und zumindest ein Sperrglied (21) umfasst und welches in einen Ruhezustand (20.1), in welchem der Durchströmungsbereich (12) für das Medium durchgängig ist, und in einen Sperrzustand (20.2), in welchem der Durchströmungsbereich (12) für das Medium durch das Sperrglied (21) verschlossen ist, überführbar ist,
**dadurch gekennzeichnet,**
**dass** das Sperrglied (21) als im Wesentlichen scheibenförmiger Sperrkörper (24) ausgebildet ist, dessen Außenumfang (25) dem Innenumfang (13) des Durchströmungsbereichs (12) angepasst ist,
**dass** das Sperrglied (21) weiterhin über einen Sperrvorsprung (26) verfügt, welcher in den Stutzen (14) hereinragt und mit einem am bzw. im Stutzen (14) befindlichen Gegenvorsprung (15) im Sperrzustand (20.2) des Absperrorgans (20) in Wirkverbindung bringbar ist
und wobei der Sperrkörper (24) und/oder das Sperrglied (21) mit einer an seiner Außenkontur (23) bzw. seinem Außenumfang (25) angeordneten umlaufenden Dichtlippe (30) versehen sind
**dass** zwei Sperrglieder (21, 22) vorgesehen sind, welche in den Durchströmungsbereich (12) einführbar und zueinander beweglich (29) angeordnet sind
**dass** im Sperrzustand (20.2) zwischen den beiden Sperrgliedern (21, 22) eine Entlüftung des Rohres (10) vorgesehen ist.

2. Vorrichtung nach Anspruch 1, **dadurch gekennzeichnet, dass** die Sperrglieder (21, 22) zueinander in Axialrichtung (16) des Durchströmungsbereiches (12) verschieblich sind, wobei im Sperrzustand (20.2) des Absperrorgans (20) jedes der Sperrglieder (21, 22) den Durchströmungsbereich (12) absperrt.

3. Vorrichtung nach einem der Ansprüche 1 oder 2, **dadurch gekennzeichnet, dass** die Bewegung (29) der Sperrglieder (21, 22) zueinander mittels eines oder mehrerer Gelenke (27), insbesondere mittels Kniegelenken erfolgt.

4. Vorrichtung nach einem der Ansprüche 1 bis 3, **dadurch gekennzeichnet, dass** die Bewegung (29) der Sperrglieder (21, 22) zueinander mittels einer Gewindespindel (28) durchführbar ist.

5. Vorrichtung nach einem der Ansprüche 1 bis 4, **dadurch gekennzeichnet, dass** die Bewegung (29) der Sperrglieder (21, 22) zueinander hydraulisch erfolgt.

6. Vorrichtung nach Anspruch 5, **dadurch gekennzeichnet, dass** zwischen den beiden Sperrgliedern (21, 22) konzentrische Zylinder vorgesehen sind, welche ineinander verschieblich sind und so die Bewegung (29) der Sperrglieder (21, 22) zueinander bestimmen.

7. Vorrichtung nach einem der Ansprüche 1 bis 6, **dadurch gekennzeichnet, dass** der Sperrkörper (24) in Form eines Klöpperbodens oder Korbbogenbodens ausgebildet ist.

8. Vorrichtung nach einem der Ansprüche 1 bis 7, **dadurch gekennzeichnet, dass** die Dichtlippe (30) so ausgebildet ist, dass sie von einem in dem Rohr (10) anliegenden Mediendruck an die Innenwand (11) des Rohres (10) gedrückt wird.

9. Vorrichtung nach einem der Ansprüche 1 bis 8, **dadurch gekennzeichnet, dass** die Dichtlippe (30) an den Sperrkörper (24) und/oder den Sperrvorsprung (26) vulkanisiert ist.

10. Vorrichtung nach einem der Ansprüche 1 bis 9, **dadurch gekennzeichnet, dass** im Ruhezustand (20.1) des Absperrorgans (20) der Stutzen (14) durch eine Schleuse (31) und/oder eine Sperrscheibe verschließbar ist.

11. Vorrichtung nach einem der Ansprüche 1 bis 10, **dadurch gekennzeichnet, dass** der Stutzen (14) nachträglich an ein bestehendes und/oder montiertes Rohr (10) anbringbar, insbesondere anschweißbar ist, vorzugsweise unter Zwischenschaltung einer Rohrschelle (32), die unlösbar mit dem Rohr (10) verbindbar ist, wobei der Stutzen (14) mit einem oder mehreren Flanschen (33) versehen sein kann, um weitere Elemente, wie beispielsweise das Absperrorgan (20) und/oder einen die Schleuse (31) enthaltenden Bauteil anzuflanschen.

12. Vorrichtung nach einem der Ansprüche 1 bis 11, **dadurch gekennzeichnet, dass** der Durchströmungsbereich (12) und/oder das Rohr (10) und/oder der Stutzen (14) nennweitengleich (17) sind.

13. Vorrichtung nach einem der Ansprüche 1 bis 12, **dadurch gekennzeichnet, dass** das Rohr (10) und/oder der Stutzen (14) und/oder der Durchströmungsbereich (12) aus Kunststoff bestehen.

14. Vorrichtung nach einem der Ansprüche 1 bis 13, **dadurch gekennzeichnet, dass** der Sperrkörper (24) und/oder der Sperrvorsprung (26) aus Metall, insbesondere aus Edelstahl oder Guss, oder aus verstärktem Kunststoff bestehen.
